# EUROPEAN PATENT APPLICATION

(11) **EP 3 406 388 A1**
(43) Date of publication of application: **28.11.2018**
(21) Application number: 17275078.8
(22) Date of filing: 26.05.2017
(51) Int. Cl.: B23K 9/32, F16L 55/134

(54) **PIPE JOINING APPARATUS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention relates to a pipe joining apparatus and specifically to a purge bladder with high elongation. There is provided a purge bladder apparatus, comprising an inflatable bladder (14), wherein the inflatable bladder (14) comprises an elastomer with an elongation at least 500% a housing (13, 13b) for mounting the inflatable bladder (14) thereon, wherein the housing (13, 13b) comprises an inlet (15) for receiving a purge gas to inflate said bladder (14), a retainer (12) to secure the bladder (14) to the housing (13, 13b).

## Description

The present invention relates to a pipe joining apparatus and specifically to a purge bladder with high elongation.

Pipe joining often requires the use of welding to create a seal between two abutting pipes. Purge bladders are balloon like devices which are positioned within a pipe either side of an area to be welded. These bladders are inflated to seal on the inner pipe wall to form a controlled volume within the pipe in the region of the weld zone. Once the bladders are inflated and the seal is created, a valve opens to flood the volume between the two bladders with a shielding or purge gas, typically an inert gas. The inert gas' purpose is to protect the welding zone from atmospheric contaminants notably oxygen and water vapour. During the welding process the presence of these contaminants can lead to the development of oxide and corrosion products which reduce weld integrity.

Purge bladders can be used in the fabrication of metal pipe work. It may be desirable to avoid contamination of the pipe work, and so in this instance the materials that the purge bladder apparatus is manufactured from must be tested to ensure that they do not contain certain contaminants. Under specific conditions these contaminants could affect the structural integrity of susceptible alloys that are commonly used in the fabrication of metal pipework. There may be strict limits controlling the levels of contaminants for materials used in the fabrication of an installation. Contaminants such as Halogens and Sulphur can cause stress corrosion cracking of certain alloys, this form of attack is particularly an issue in the sensitised area of a weld. Additionally under specific conditions low melting point metal contaminants such as Antimony, Arsenic, Bismuth, Cadmium, Copper, Gallium, Lead, Mercury, Tin and Zinc can cause the substrate to become brittle very rapidly, this effect is known as liquid metal embrittlement. The usual construction of a purge bladder is an inner elastomeric bladder (typically butyl or latex rubber) which is restrained within a fabric cover (typically cotton or nylon). Both butyl and latex elastomers contain levels or sulphur and zinc within their composition well in excess of 200ppm, the outer fabric cover thus prevents these contaminants from coming into contact with the metal pipework. If the purge bladders fail in service, parts of the ruptured inner bladder may be deposited in the pipework.

According to a first aspect of present invention there is provided a purge bladder apparatus, comprising
an inflatable bladder, wherein the inflatable bladder comprises an elastomer with an elongation at break of at least 500%
a housing for mounting the inflatable bladder thereon, wherein the housing comprises an inlet for receiving the purge gas to inflate said bladder, a retainer to secure the bladder to the housing.

The elastomer preferably has an elongation at break of greater than 1000%, more preferably in the range of from 1000% to 5000%, preferably at least 2000%, more preferably in the range of from 1000% to 2000%.

In a highly preferred arrangement the elastomer is a polysiloxane nanocomposite elastomer; wherein the polysiloxane nanocomposite elastomer is a catalyzed step growth polymerization product of a heterobifunctional silicone macromonomer compounded with at least 15 wt% surface passivated silica nanoparticles, as defined in WO2016176109, and incorporated herein. Preferably the elastomer is ExSil®.

The contaminants that may effect the integrity of a weld have been defined hereinbefore. The polysiloxane nanocomposite elastomer has advantageously been found to have level of contaminants less than 200ppm which allows the material to be used in an unconfined state in contact with susceptible metal pipework. Preferably the elastomer has levels of contaminants between zero and 200ppm, more preferably less than 50ppm. The use of the polysiloxane nanocomposite elastomer allows for a simple purge bladder design to be used.

Preferably the inflatable bladder contains only the polysiloxane nanocomposite elastomer.

The prior art uses a latex or butyl rubber as the bladder material, which due to their cure system have unacceptably high levels of contaminants. The prior art bladders therefore need to be fully encapsulated within a fail-safe envelope to ensure that in service or in the event of a rupture of the latex bladder, that all fragments are captured. The fail-safe envelope materials that are commonly used are nylon and cotton. These materials have a very small degree of elasticity and hence their elongation at break is very is small. Therefore in order for the fail-safe envelope arrangement to fully cover the inflated latex bladder, the fail-safe envelope will be required to have a large surface area. Ideally, a purge bladder system would be entered into the end of a pipe to be joined, however, where this is not possible the purge bladder system is introduced into the pipe to be joined via an entry portal, pipe stub or branch. The large fail-safe envelope increases the overall size of the purge bladder system that needs to be passed through an entry portal, pipe stub or branch, and into the pipe to be joined.

The pipe to be joined may be any diameter pipe or tube. The use of an elastomer with an elongation at break of greater than 500% allows for one size of purge bladder to fit multiple sizes of diameter pipes to be joined. Prior art devices often require several sizes to cover a range of internal pipe diameters.

Where sections of pipe need to be replaced or where there are already long sections of pipe, the purge bladder needs to be introduced into the pipe to joined, near to the weld site; entry to the pipe to be joined is typically via an entry portal, pipe stub or branch which is often significantly smaller in diameter than the pipe to be joined. The size of opening in the entry portal, pipe stub or branch is often so small that it necessitates crushing or compressing a purge bladder system that has a large fail-safe envelope.

In a preferred arrangement the housing further comprises a through-flow pipe, such that a portion of the purge gas may be flowed through the housing, and not via the bladder, such that a positive pressure of purge gas may be provided into the area of the weld line. The weld line is the region where two pipes to be joined, are abutted together.

To allow for facile manufacture the housing may comprise a through flow pipe, and where it is not required and is used as an end unit purge bladder only, a simple bung or cap may be used. This avoids producing dedicated through-flow units and end units.

In a further arrangement the housing may comprise a first end and a second end, wherein the first end and second end each comprise a mating surface for receiving the inflatable bladder; preferably the bladder is in the form of an open ended sheath, wherein the sheath is secured with the retainer onto the mating surface to form a gas-tight seal.

The first end may comprise a first inlet to allow the purge gas to flow into the housing to inflate the bladder. The first end may have a second inlet which allows the purge gas to flow via a through-flow pipe, such as to provide a purging gas to the weld line.

The second end, may be blank with no outlets, in which case the purge bladder acts as an end unit, and prevents escape of the purge gas down the pipe to be joined. Alternatively the second end may comprise a first outlet, for the through-flow pipe, so as to provide a flow of purge gas, through the housing to the weld line.

Further the sheath material of the bladder may have little or no structural rigidity and to provide the housing with structural support, the first and second end may comprise a support to retain alignment and rigidity of the first and second ends of the housing. Where the housing comprises a through-flow pipe, this may conveniently serve as the structural support. The structural support must allow the bladder to be inflated.

The structural support may be in the form of a wall structure. The wall structure may comprise a plurality of openings to allow the purge bladder to be inflated. Further the use of a wall structure may provide support for the sheath of elastomer, in the non-inflated state.

The housing may be formed from any suitable material, preferably one that is compatible with the weld process and does not contain contaminants. The housing may be formed from a polymer, metal, composite. It may be printed by additive layer manufacture, or machined, or formed by any known means.

The retainer may be any suitable fastening means capable of holding the sheath onto the housing. The retainer may be semi-permanent such as for example an adhesive bond, which may be applied between the housing and the sheath. Alternatively, the retainer may be reversible, such as for example a pipe clip, zip tie, spring clip. Should the sheath material become damaged in service, in this arrangement it is possible to replace the sheath and hence the inflatable bladder portion, whilst repeatedly reusing the housing. The housing may have an outer surface which has a high friction finish, to help retain the sheath on the housing, such a high friction finish, may be ribs, ridges, or a polymer coating.

The housing may further comprise a sensor. Preferably the sensor is a sensor for detecting pressure. The sensor may be located within the housing to measure the pressure within the inflated bladder. A further sensor may be located proximate to the through-flow pipe to allow the pressure of the purge gas flowing through the through-flow pipe, to be measured.

Further monitoring devices and/or further sensors may be incorporated, such as to detect parameters such as for example moisture, temperature and purge gas composition. Further there may be surveillance such as a camera or video, with capture in the IR and/or optical wavelengths such as to monitor the position of the purge bladder, the welding process and inspect the weld.

According to a further aspect of the invention there is provided a pipe joining system, suitable for welding a first and second abutting pipes to be joined, which are to be welded at a weld line, comprising
a first apparatus with a first bladder according as defined herein,
a second apparatus which comprises a through-flow pipe, such that a portion of the purge gas may be flowed through the housing, and not via the bladder, such that a positive pressure of purge gas may be provided into the area of the weld line;
a supply of purge gas.

The housing may have a cross section, with a largest dimension of less than 50mm, preferably less than 30mm. It is desirable that purge bladder system shall pass through the entry port, into the pipes to be joined, by a weld, freely and without distortion. The use of a simple sheath with exceptionally high elongation allows for a very compact and small diameter purge bladder assembly.

The sheath may have any thickness, its thickness will be determined on the diameter of the pipe to be joined. For a typical pipe to be joined of between 50mm and 500mm diameter, the thickness of the sheath may be in the range of from 0.5mm to 6mm, more preferably in the range of from, 1 mm to 2mm.

According to a further aspect of the invention there is provided a method of joining a pipe to be joined under an inert atmosphere, comprising the steps of providing a first and second abutting pipes to be joined by a weld, at a weld line,
i) inserting a first apparatus with a first bladder as defined herein, in the first pipe to be joined one side of the weld line
ii) inserting a second apparatus as defined herein, which comprises a through-flow pipe, such that a portion of the purge gas may be flowed through the housing, and not via the bladder, such that a positive pressure of purge gas may be provided into the area of the weld line, the other side of the weld line,
iii) causing a purge gas to flow through the through-flow pipe of apparatus ii), to inflate the first bladder, to create a gas tight seal between the first bladder and first pipe to be joined,
iv) causing the purge gas to flow into the second bladder to inflate the second bladder, to create a gas tight seal between the second bladder and second pipe to be joined
v) performing a weld on the weld line, under a positive pressure of the purge gas.

In a preferred arrangement the positive pressure is in the range of 0 mmBar to 4 mmBar, yet more preferably 0mmBar to 2mmBar, preferably pressure is less than 4mmbar.

According to a further aspect of the invention there is provided the use of a polysiloxane nanocomposite elastomer as a purge bladder with an elongation greater than 500%; wherein the polysiloxane nanocomposite elastomer is a catalyzed step growth polymerization product of a heterobifunctional silicone macromonomer compounded with at least 15 wt% surface passivated silica nanoparticles. The purge bladder comprising the polysiloxane nanocomposite elastomer may simply be attached to a gas supply, via a gas line, and inserted into the pipe to be joined. The purge bladder may simply inflate like a balloon and form a seal in the pipe to be joined.

So that the invention may be well understood, embodiments thereof shall now be described with reference to the following figures, of which:
Figure 1 shows a deflated through flow device
Figure 2 shows an inflated through flow device
Figure 3 shows a deflated end piece with a support wall
Figure 4 shows an inflated end piece
Figure 5 shows a pipe joining system
Figure 6 shows an inflated through flow device with support wall.

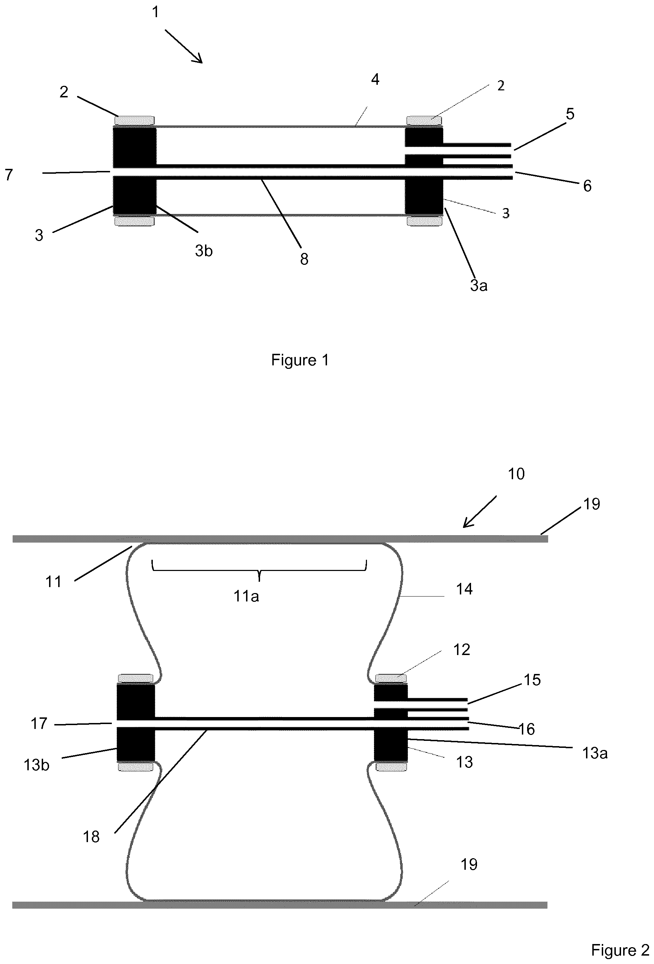

Turning to figure 1 there is an apparatus 1, which is formed from a housing 3, formed from a first end 3a and a second end 3b. The housing 3, about an external surface is mounted a high elongation bladder 4, which is secured by a retainer 2. The housing first end 3a and second end 3b are structurally supported and joined by through-flow pipe 8. On the first end of the housing 3a is a first gas inlet 5, which when supplied with a gas inflates the bladder 4. The through-flow pipe 8 is operably connected to a second gas inlet 6 on the first end of the housing 3a. At the distal end of the through-flow pipe 8, on a second end of the housing 3b is a first gas outlet 7, to provide means of passing a purge gas through the housing and inflated bladder, and into the weld area(not shown). The flow of purge gas through the through flow pipe may then be provided at a different pressure to the weld area, than is supplied to the bladder.

Turning to figure 2 there is provided an inflated apparatus 10. The bladder 14 is inflated until such point that it creates a gas-tight seal 11 with a pipe to be joined 19, by a weld. The apparatus is formed from a housing 13, formed from a first end 13a and a second end 13b. The housing 13, about an external surface is mounted a high elongation bladder 14, which is secured by a retainer 12. The housing first end 13a and second end 13b are structurally supported and joined by through-flow pipe 18. On the first end of the housing 13a is a first gas inlet 15, which when supplied with a gas inflates the bladder 14, as shown. The through-flow pipe 18, is operably connected to a second gas inlet 16 on the first end of the housing 13a. at the distal end of the pipe 18, on a second end of the housing 13b is a first gas outlet 17, to provide means of passing a purge gas through the housing and inflated bladder, and into the weld area(not shown). It is desirable that the elastomer 14 has an elongate seal 11 a, rather than simply point contact with the pipe to be joined 19.

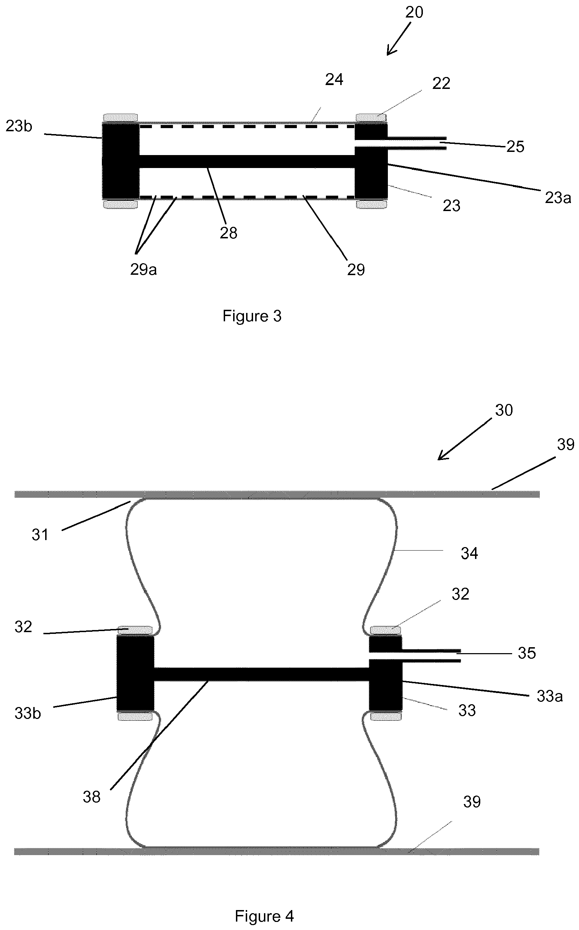

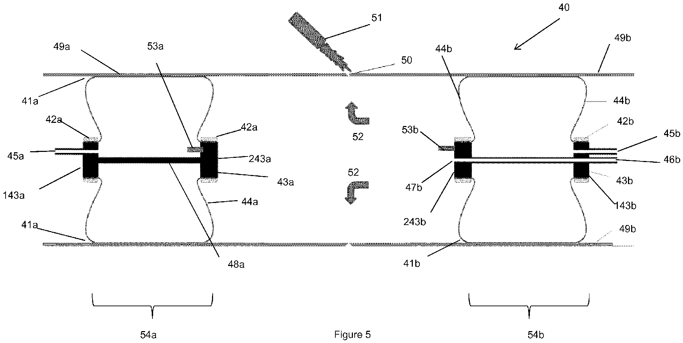

Turing to figure 3, there is provided an end unit apparatus 20, which is formed from a housing 23, formed from a first end 23a and a second end 23b. The housing 23, about an external surface is mounted a high elongation bladder 24, which is secured by a retainer 22. The housing first end 23a and second end 23b are linked by a structural support 28 and a structural wall 29. The structural wall comprises apertures 29a, to allow the purge gas to inflate the bladder. The bladder 24, in the form of a sheath, rests on the structural wall 29 in its deflated state. On the first end of the housing 23a is a first gas inlet 25, which when supplied with a gas inflates the bladder 24. When end unit 20 is inserted into the pipe to be joined (figure 5), it merely serves to block flow of the purge gas escaping down the pipes to be joined.

Turning to figure 4 there is provided an inflated end unit apparatus 30 The bladder 34 is inflated until such point that it creates a gas-tight seal 31 with a pipe to be joined 39. The apparatus is formed from a housing 33, formed from a first end 33a and a second end 33b. The housing 33, about an external surface is mounted a high elongation bladder 34, which is secured by a retainer 32. The housing first end 33a and second end 33b are linked by a structural support 38. On the first end of the housing 33a is a first gas inlet 35, which when supplied with a gas inflates the bladder 34, as shown. When end unit 30 is inserted into the pipe to be joined (figure 5), it merely serves to block flow of the purge gas escaping down the pipes to be joined.

Turning to figure 5 there is provided a pipe joining system 40. There is provided an end unit 54a and a through-flow unit 54b, inside a first pipe to be joined 49a and second pipe to be joined 49b respectively, which are to be welded at the weld line 50. The units 54a and 54b, are located either side of the weld line 50, to allow a weld apparatus 51 to provide a weld, under a positive pressure of a purge gas 52.

The end unit 54a is an inflated end unit. The bladder 44a is inflated until such point that it creates a gas-tight seal 41 a with a first pipe to be joined 49a. The apparatus is formed from a housing 43a, formed from a first end 143a and a second end 243a. The housing 43, about an external surface is mounted a high elongation bladder 44a, which is secured by a retainer 42a. The housing 43 first end 143a and second end 243a are linked by a structural support 48a. On the first end of the housing 143a is a first gas inlet 45a, this is supplied with a positive pressure of a purge gas such as argon, to inflate the bladder 44a, until it forms the gas-tight seal 41a. This provides a gas tight seal for the first pipe to be joined 49a.

Once the end unit 54a is in place in the first pipe to be joined 49a, the through-flow unit 54b, is shown it its inflated state, is located inside the second pipe to be joined 49b. The bladder 44b is inflated until such point that it creates a gas-tight seal 41 b with a pipe to be joined 49b. The apparatus is formed from a housing 43b, formed from a first end 143b and a second end 243b. The housing 43, about an external surface is mounted a high elongation bladder 44b, which is secured by a retainer 42b. The housing first end 143b and second end 243b are structurally supported and joined by through-flow pipe 48b. On the first end of the housing 143b is a first gas inlet 45b, which when supplied with a gas inflates the bladder 44b, as shown. Once the second bladder 44b is inflated both pipes to be joined 49a and 49b are sealed, and the only outlet for the purge gas is the weld line 50.

The through-flow pipe 48b, is operably connected to a second gas inlet 46b on the first end of the housing 143b. At the distal end of the pipe 48b, on a second end of the housing 243b is a first gas outlet 47b, to provide means of passing a purge gas through the housing and inflated bladder, thereby avoiding over inflating the bladder 44b.

The purge gas is flowed through inlet 46b to provide a positive pressure of purge gas at the weld line 50, such that the weld apparatus may perform a contaminant free weld.

It is desirable to monitor the pressure in the bladder, and sensor 53a, may be a piezo pressure transducer to monitor the pressure inside inflated bladder 44a. The sensor may detect when the bladder has fully inflated and ensure that there is a constant pressure inside the bladder 44a, ie that there is not a rupture or breach of the bladder or its seal.

Further there may be a further sensor 53b, located external to the bladder to monitor pressure, temperature and humidity in the area proximate to the weld line. Alternatively sensor 53b may be a video camera to provide a live feed of the weld, for both monitoring, and once the weld is complete, inspection.

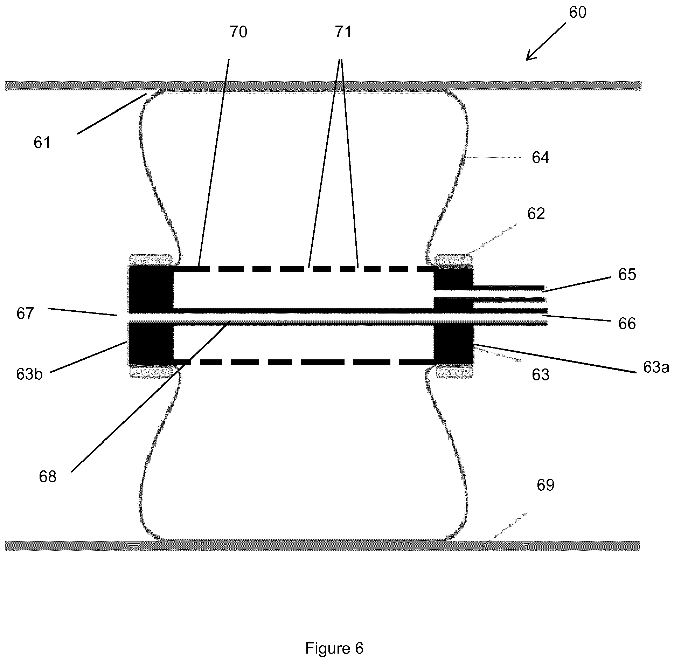

Turning to figure 6 there is provided an inflated apparatus 60. The bladder 64 is inflated until such point that it creates a gas-tight seal 61 with a pipe to be joined 69, by a weld. The apparatus is formed from a housing 63, formed from a first end 63a and a second end 63b. The housing 63, about an external surface is mounted a high elongation bladder 64, which is secured by a retainer 62. The housing first end 63a and second end 63b are structurally supported and joined by through-flow pipe 68, and a wall structure 70. The wall structure 70 comprises a plurality of apertures 71, to allow the purge gas from in let 65 to fill the bladder 64. During the deflated stage, the sheath 64 may rest and be supported on the wall structure 70. On the first end of the housing 63a is a first gas inlet 65, which when supplied with a gas inflates the bladder 64, as shown. The through-flow pipe 68, is operably connected to a second gas inlet 66 on the first end of the housing 63a. at the distal end of the pipe 68, on a second end of the housing 63b is a first gas outlet 67, to provide means of passing a purge gas through the housing and inflated bladder, and into the weld area(not shown).

## Claims

1. A purge bladder apparatus, comprising
an inflatable bladder, wherein the inflatable bladder comprises an elastomer with an elongation at least 500%
a housing for mounting the inflatable bladder thereon, wherein the housing comprises an inlet for receiving a purge gas to inflate said bladder, a retainer to secure the bladder to the housing.

2. Apparatus according to claim 1, wherein the elastomer has an elongation of at least 2000%.

3. Apparatus according to claim 1, wherein the elastomer is a polysiloxane nanocomposite elastomer.

4. Apparatus according to claim 3, wherein the polysiloxane nanocomposite elastomer is a catalyzed step growth polymerization product of a heterobifunctional silicone macromonomer compounded with at least about 15 wt% surface passivated silica nanoparticles.

5. Apparatus, according to any one of the preceding claims wherein the housing further comprises a through-flow pipe, such that a portion of the purge gas may be flowed through the housing.

6. An apparatus according to any one of the preceding claim wherein the housing comprises a first end and a second end,
wherein the first end and second end each comprise a mating surface for receiving the inflatable bladder in the form of an open ended sheath, wherein the sheath is secured with the retainer onto the mating surface to form a gas-tight seal.

7. Apparatus according to claim 6 wherein the retainer is a pipe clip, zip tie, spring clip, or an adhesive bond.

8. Apparatus according to any one of the preceding claims, wherein the housing has a cross section, with a largest dimension of less than 50mm.

9. Apparatus according to any one of claims 6 to 7, wherein the sheath has a thickness in the range of from 0.5mm to 6mm .

10. Apparatus according to anyone of claims 3 to 9 wherein the inflatable bladder contains only the polysiloxane nanocomposite elastomer.

11. A pipe joining system, suitable for welding a first and second abutting pipes to be joined, which are to be welded at a weld line, comprising
a first apparatus with a first bladder according to any one of the proceeding claims;
a second apparatus according to any one of claims 5 to 10;
a supply of purge gas.

12. A method of joining a pipe under an inert atmosphere, comprising the steps of providing a first and second abutting pipes to be joined at a weld line,
i) inserting a first apparatus with a first bladder according to any one of the proceeding claims in the first pipe to be joined one side of the weld line
ii) inserting a second apparatus with a second bladder, according to any one of claims 5 to 10, in the second pipe to be joined, the other side of the weld line,
iii) causing a purge gas to flow through the through-flow pipe of apparatus ii), to inflate the first bladder, to create a gas tight seal between the first bladder and first pipe to be joined
iv) causing the purge gas to flow into the second bladder to inflate the second bladder, to create a gas tight seal between the second bladder and second pipe to be joined
v) performing the weld under a positive pressure of the purge gas.

13. A method according to claim 11, wherein the positive pressure is less than 10mmbar.

14. The use of a polysiloxane nanocomposite elastomer as a purge bladder with an elongation greater than 500%; wherein the polysiloxane nanocomposite elastomer is a catalyzed step growth polymerization product of a heterobifunctional silicone macromonomer compounded with at least 15 wt% surface passivated silica nanoparticles.
